# EUROPEAN PATENT SPECIFICATION

(11) **EP 3 951 944 B1**
(45) Date of publication and mention of the grant of the patent: **03.05.2023**
(21) Application number: 20853783.7
(22) Date of filing: 12.08.2020
(51) Int. Cl.: H01M 4/38, H01M 4/58, H01M 4/62

(54) **SECONDARY BATTERY, BATTERY MODULE RELATED THERETO, BATTERY PACK, AND APPARATUS**
SECUNDÄBATTERIE, BATTERIEMODUL IM ZUSAMMENHANG DAMIT, BATTERIEPACK UND VORRICHTUNG
BATTERIE SECONDAIRE, MODULE DE BATTERIE ASSOCIÉ À CELLE-CI, BLOC-BATTERIE ET DISPOSITIF

(30) Priority: 22.08.2019 CN 201910777649
(43) Date of publication of application: 09.02.2022
(73) Proprietor: Contemporary Amperex Technology Co., Limited, Ningde City, Fujian PRC 352100 (CN)
(72) Inventor: LIANG, Chengdu, Ningde, Fujian 352100 (CN); CHEN, Peipei, Ningde, Fujian 352100 (CN); FU, Chenghua, Ningde, Fujian 352100 (CN); PENG, Chang, Ningde, Fujian 352100 (CN)
(74) Representative: Valea AB
(86) International application number: PCT/CN2020/108687
(87) International publication number: WO 2021/031956

(56) References cited:
- CN-A- 103 456 928
- CN-A- 105 633 368
- CN-A- 105 981 209
- CN-A- 109 560 262
- CN-A- 109 923 699
- CN-A- 110 036 521
- JP-A- 2013 084 590
- JP-A- 2015 170 542

## Description

### TECHNICAL FIELD

The present application relates to the field of electrochemical technology, and more particularly, to a secondary battery. The present application also relates to a battery module, battery pack and apparatus related to secondary battery.

### BACKGROUND

With the increasingly prominent energy and environmental problems, the new energy industry has received more and more attention. Secondary batteries are widely used as an important new energy storage device because of their high energy density and good cycle performance. In recent years, secondary batteries have been developing towards high energy output and wide application conditions. As the four main materials of secondary batteries, positive materials, negative materials, isolation films and electrolytes have attracted the attention of researchers.

In recent years, non-carbon negative electrode active materials have attracted great attention in the field of negative electrode active materials of secondary batteries. As a representative of non-carbon negative electrode active materials, silicon-based materials have become the focus of attention because of their higher theoretical capacity (4200 mAh/g), lower lithium intercalation potential, higher electrochemical reversible capacity, better safety performance and richer resources than traditional graphite.

CN1100365521 A discloses a lithium ion secondary battery wherein the anode comprises SiO as the active material and 10 wt% polyimide as a binder. An anode slurry is obtained by dispersing polyimide binder, Si and SiO2 in N-methylpryrolidone. The anode slurry is applied to a copper current collector. The electrolyte solution comprises 0.2M to 1M LiPF6 and 0.2M to 1M LiFSI (Lithium bis(fluorosulfonylimide)). The organic electrolyte solvent may comprise ethylene carbonate.

### SUMMARY

The invention is set out in the attached set of claims.

In the secondary battery according to the application, the negative electrode active material has a core-shell structure, wherein the silicon-based material in the core has a high gram capacity, and the surface of the silicon-based core material is coated with a polymer network coating layer, which can significantly inhibit the expansion of the silicon-based material, so as to improve the cycle performance of the battery. Moreover, a secondary battery with both good capacity and good dynamic cycle performance can be obtained by combining an electrolyte solution containing lithium sulfonimide with the negative electrode active material during the assembly process of the battery.

Without being bound by any theory, the inventors provide the following explanations so as to better understand the present application.

In the secondary battery according to the application, an electrolyte solution of sulfonimide lithium salt is adopted. On one hand, because the anion of sulfonimide lithium salt is larger than the anion PF₆⁻ of commonly-used lithium salt LiPF₆, it is more difficult to migrate, which improves the relative migration ability of Li⁺; on the other hand, the sulfonimide anion is a large conjugate structure with a small electron cloud density and small interaction force with Li⁺. The above two aspects make the electrolyte solution formed by using a sulfonimide lithium salt has a high conductivity. Moreover, the anion of sulfonimide lithium salt has strong similarity miscibility with the polymer in the network coating layer so that the solvated Li⁺ is easier to pass through the network coating layer, which improves the wettability and ionic conductivity of electrolyte solution at the interface of negative electrode active material.

Using SiOₓ coated with a polymer network layer derived from a polymer having one or more functional groups selected from cyano group, amide group, imide group, sulfonyl group, carboxyl group and sulfonyl group as a negative electrode active material, the expansion of the negative plate can be improved, but the electrochemical performance (such as the rate performance) usually deteriorates.

During the assembly process of the secondary battery according to the present application, the inventors used the above two technical means in combination, and surprisingly found that that the two technical means could produce a synergistic effect. Therefore, the secondary battery according to the present application can have high energy density and good dynamic cycle performance.

The details of one or more embodiments of the present application will be set forth in the following description. According to the specification and claims, other features, purposes and advantages of this application would become apparent.

### DEFINITION

In the content of the present application, when "a", "an", "the" or a similar expression is used, it should be interpreted as covering both singular and plural numbers, unless otherwise stated or clearly contradictory to the context.

Throughout the present invention, where compositions are described as having, including, or comprising specific components or fractions, or where processes are described as having, including, or comprising specific process steps, it is contemplated that the compositions or processes as disclosed herein may further comprise other components or fractions or steps, whether or not, specifically mentioned in this invention, but it is also contemplated that the compositions or processes may consist essentially of, or consist of, the recited components or steps.

For the sake of brevity, only certain ranges are explicitly disclosed herein. However, ranges from any lower limit may be combined with any upper limit to recite a range not explicitly recited, as well as, ranges from any lower limit may be combined with any other lower limit to recite a range not explicitly recited, in the same way, ranges from any upper limit may be combined with any other upper limit to recite a range not explicitly recited. Additionally, within a range includes every point or individual value between its end points even though not explicitly recited. Thus, every point or individual value may serve as its own lower or upper limit combined with any other point or individual value or any other lower or upper limit, to recite a range not explicitly recited.

As used herein, the term "primary lithium salt" refers to a lithium salt that exerts a main function in the electrolyte solution, and its content usually accounts for 5 mass% or more of the total mass of the electrolyte solution.

As used herein, the term "secondary lithium salt" refers to a lithium salt that exerts a minor function in the electrolyte solution. For example, it may be used to reduce the cost of the electrolyte solution or inhibit the negative effects caused by the use of the primary lithium salt, etc. Generally, its content accounts for 10 mass% or less, for example 5 mass% or less, e.g. 3 mass% or less, of the total mass of the electrolyte solution.

As used herein, the term "polymer network coating layer" refers to a layer for coating the silicon-based material as a core, which has a network structure formed by cross-linked polymers. In order to form the network coating layer, the polymer used usually has one or more functional groups selected from cyano group, amide group, imide group, sulfonyl group, carboxyl group and sulfonyl group groups, and one or more crosslinking agents selected from ethylene glycol, glycerol, triethylenetetramine, dimethylaminopropylamine and sulfur-containing compounds can be used, which may be optionally ethylene glycol.

In the context of describing a group or compound herein, the term "fluoro" refers to a group or compound in which one or more hydrogen atom(s) are replaced by fluorine atom(s). Optionally, fluoro refers to perfluoro or partially fluoro. For example, fluoromethyl includes but is not limited to -CF₃, -CHF₂, and -CH₂F.

When used in the context of secondary batteries, the term "4C rate" is a parameter used to measure the capacity of a secondary battery. Generally, the higher the 4C rate, the greater the capacity of the secondary battery.

When used in the context of secondary batteries, the term "capacity retention rate" is a parameter used to measure the cycle performance of a secondary battery at 25°C. Generally, the higher the capacity retention rate, the better the cycle performance of the secondary battery.

The terms "optional" and "optional" refer to embodiments of the invention that may afford certain benefits, under certain circumstances. However, other embodiments may also be optional, under the same or other circumstances. Furthermore, the recitation of one or more preferred embodiments does not imply that other embodiments are not possible, and is not intended to exclude other embodiments from the scope of the application.

### DESCRIPTION OF THE DRAWINGS

Figure 1 is a perspective view of a secondary battery according to an embodiment of the present application.
Figure 2 is an exploded view of Figure 1.
Figure 3 is a perspective view of a battery module according to an embodiment of the present application.
Figure 4 is a perspective view of a battery pack according to an embodiment of the present application.
Figure 5 is an exploded view of Figure 4.
Figure 6 is a schematic view showing an apparatus with a secondary battery as a power source according to an embodiment of the present application.

In above figures, the denotation of the reference numerals is as follows: 1- battery pack; 2-upper cabinet body; 3-lower cabinet body; 4-battery module; 5-seconday battery; 51-case; 52-electrode assembly; and 53-top cover assembly.

### DETAILED DESCRIPTION

The secondary battery according to the present application will be described in detail below.

The secondary battery according to the present application comprises a positive electrode plate, a negative electrode plate, a separator spaced between the positive electrode plate and the negative electrode plate, and an electrolyte solution, the negative electrode plate comprising a negative electrode current collector and a negative electrode active material layer provided on at least one side of the negative electrode current collector, and the electrolyte solution including an organic solvent and a lithium salt.

First, the negative electrode active material in the secondary battery according to the present application will be illustrated. In an embodiment according to the present application, the negative electrode active material has a core-shell structure, including a core structure and a network coating layer of a polymer coated on at least a part of the surface of the core structure, wherein the core structure includes SiOₓ (0 < x < 2), the polymer network coating layer accounts for at least 0.5 mass% and at most 10 mass% of the total mass of the negative electrode active material, and the network coating layer is derived from a polymer with one or more functional groups selected from cyano group, amide group, imide group, sulfonyl group, carboxyl group and sulfonyl group. In the negative electrode active material according to the present application, the coating layer for coating the core structure is a network structure formed by a cross-linked polymer. The inventors have surprisingly found that by using a polymer layer with a network structure formed by a cross-linked polymer to coat the silicon-based material, the expansion of the silicon-based material as a core structure can be significantly inhibited, and the conductivity of the negative electrode active material will not significantly deteriorate when used in combination with a specific electrolyte solution, which effect was difficult to predict before the present application.

In the field of secondary battery, when a silicon-based material is used as a negative electrode active material, it will produce a huge volume expansion (about 400%) during the course of lithium intercalation, resulting in the pulverization and falling off of negative electrode active material and the massive extrusion of infiltrated electrolyte solution and in turn a significant solid-liquid interface change between the negative electrode active material and electrolyte solution, which greatly reduces the cycle performance of the battery. In related applications, the silicon-based material can be coated with elemental carbon to reduce the expansion of the silicon-based material. This carbon coating is usually formed by physical evaporation or chemical evaporation of gaseous organic substances such as methane and acetylene. However, this method has the problems of complex preparation process and high equipment investment. In contrast, the negative electrode active material according to the application can be obtained through a simple mixing, heating and cross-linking process, which greatly reduces the production cost and expands the application prospect of silicon-based materials.

According to some embodiments of the present application, in the negative electrode active material, optionally, the network coating is derived from a polymer including polyimide, polyacrylonitrile, polyacrylamide, polyacrylic acid, sodium alginate or any combination thereof.

According to some embodiments of the present application, in the negative electrode active material, optionally, the network coating layer is coated on 80% or more of the surface of the core structure, 85% or more of the surface of the core structure, 90% or more of the surface of the core structure, 95% or more of the surface of the core structure, or 99% or more of the surface of the core structure. Too small coating area will lead to too large core structure surface in direct contact with the electrolyte solution, which will continuously cause side reactions and consume active ions in the process of battery cycle, so as to deteriorate the cycle performance of the battery.

According to some embodiments of the present application, in the negative electrode active material, optionally, the mass of the network coating layer accounts for 0.5% to 10% of the total mass of the negative electrode active material, and more optionally 1% to 5%. The ratio of the mass of the network coating layer to the total mass of the negative electrode active material can be determined by calculation based on the amount of C element from the network coating layer measured by an element tester. In an embodiment in which the polymer network coating layer of the application is cross-linked with a sulfur-containing compound, the mass ratio of the polymer network coating layer in the negative electrode active material can be determined by calculation based on the C element amount and optional S element amount measured by using a high-frequency infrared C-S analyzer.

According to some embodiments of the present application, in the negative electrode active material, optionally, the thickness of the network coating layer is 10 nm to 700 nm, and optionally 100 nm to 400 nm.

Through a large number of studies, the inventors have found that the rate performance and cycle performance of a battery are greatly related to the polymer network coating of the negative electrode active material. As well known, silicon-based materials have become the most concerned negative electrode active materials for high energy density lithium-ion batteries because of their high theoretical capacity (4200mAh/g), low lithium intercalation potential, high electrochemical reversible capacity, good safety performance and rich resources. However, silicon-based materials will produce a huge volume expansion (about 20% - 400%) during the cycles, resulting in the pulverization and falling off of active materials during the charge and discharge process, greatly reducing the cycle performance of the battery. A layer of polymer network coating on the surface of Si material can significantly reduce the expansion of silicon particles. Too little network coating will lead to too large core structure surface in direct contact with the electrolyte solution, which will continuously cause side reactions and consume active ions in the process of battery cycle, so as to deteriorate the cycle performance of the battery. When the network coating layer is too thick, it may lead to the obstruction of electron conduction and ion transmission, and affect the charging rate and power performance of the battery; and when the charging rate is too high, it may lead to ALP and deteriorate the cycle performance.

Therefore, in an optional embodiment of the present application, the polymer network coating is present in an amount of 0.5 mass% to 10 mass% relative to the total mass of the negative electrode active material, or in an amount of 1 mass% to 10 mass% relative to the total mass of the negative electrode active material, or in an amount of 3 mass% to 10 mass% relative to the total mass of the negative electrode active material, or in an amount of 5 mass% to 10 mass% relative to the total mass of the negative electrode active material, or in an amount of 8 mass% to 10 mass% relative to the total mass of the negative electrode active material, or in an amount of 0.5 mass% to 8 mass% relative to the total mass of the negative electrode active material, or in an amount of 1 mass% to 8 mass% relative to the total mass of the negative electrode active material, or in an amount of 3 mass% to 8 mass% relative to the total mass of the negative electrode active material, or in an amount of 5 mass% to 8 mass% relative to the total mass of the negative electrode active material, or in an amount of 0.5 mass% to 5 mass% relative to the total mass of the negative electrode active material, or in an amount of 1 mass% to 5 mass% relative to the total mass of the negative electrode active material, or in an amount of 3 mass% to 5 mass% relative to the total mass of the negative electrode active material, or in an amount of 5 mass% to 8 mass% relative to the total mass of the negative electrode active material. In particular, the polymer network coating layer is optionally present in an amount of 1 mass% to 5 mass% relative to the total mass of the negative electrode active material.

In one embodiment of the present application, the negative electrode active material can be prepared by a method comprising the following steps: (1) pulverizing SiOₓ (0 < x < 2) powders to obtain a material with a certain particle size distribution; (2) dissolving a certain mass of polymer and corresponding cross-linking agent into a solvent to prepare a polymer slurry 1; (3) adding SiOₓ (0 < x < 2) powders of step (1) to the slurry 1 and stirring until it is evenly mixed to obtain a slurry 2; (4) drying the slurry 2 at 50°C to 100°C until the solvent is completely removed, sieving the obtained product and heating it to cause cross-linking so as to obtain the negative electrode active material. Optionally, the mass of the polymer is 1% to 10% of the mass of SiOₓ (0 < x < 2) powders. Optionally, a certain mass of conductive material can also be added to the slurry 1.

In the above preparation method, the solvent in step (1) can be selected from one or more of water, acetone, dimethylpyrrolidone, dimethylformamide and ethanol.

In the above preparation method, the conductive material can be selected from one or more of conductive carbon black, carbon nanotube and graphene. The addition amount of the conductive agent is 10% to 30% of the mass of the polymer.

In the above preparation method, the cross-linking agent can be selected from one or more of ethylene glycol, glycerol, triethylenetetramine, dimethylaminopropylamine and sulfur-containing compounds, and optionally be selected from sulfur-containing compounds.

Sulfur compounds can be selected from one or more of sulfur, hydrogen sulfide and thiophene. Optionally, the mass of the cross-linking agent is 10% to 30% of the mass of the polymer.

In the above preparation method, the cross-linking temperature can be 300°C to 500°C, and carbonization of the polymer can be avoided by controlling the temperature within this range.

The resulting negative electrode active material can be used directly or in combination with other conventional negative electrode active materials for manufacturing negative electrode plates.

A negative electrode plate according to the application can be configured to have a conventional structure and prepared by a conventional method commonly used for negative electrode plates in the art. For example, the negative electrode plate may include a negative current collector and a negative electrode active material layer arranged on the negative current collector, and the negative electrode active material layer may include the above negative electrode active material, optional other negative electrode active materials, adhesives, conductive materials, etc. Other negative electrode active materials are, for example, carbonaceous materials such as graphite (artificial graphite or natural graphite), conductive carbon black, carbon fiber, etc., metal or semi-metal materials such as Sn, Ge, Bi, Sn, In or their alloys, lithium nitrides or lithium oxides, lithium metals or lithium aluminum alloys, etc.

Next, the electrolyte solution in the secondary battery according to the present application will be described. In some embodiments according to the present application, the electrolyte solution including an organic solvent and a lithium salt. The lithium salt comprises the primary lithium salt represented by Formula I: 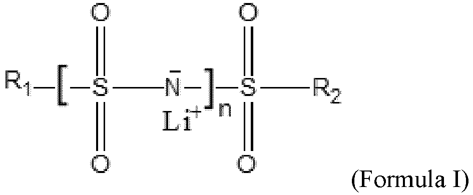 in which Formula I, R₁ and R₂ each independently represent a fluorine atom, a fluoroalkyl group having 1-20 carbon atoms, or a fluoroalkoxy group having 1-20 carbon atoms, and n is an integer of 1, 2 or 3.

In the above general Formula I, in the fluoroalkyl group with 1-20 carbon atoms, the number of fluorine atoms and the substitution position thereof are not particularly limited. According to actual demand, the fluorine atom may be selected to replace some of the hydrogen atoms or all of the hydrogen atoms in the alkyl group. For example, the number of fluorine atom may be one, two, three, four or more.

As examples of fluoroalkyl groups, fluoromethyl, 2-fluoroisobutyl, 2-fluoroethyl, 1-fluoroethyl, 3-fluoro-n-propyl, 2-fluoroisopropyl, 4-fluoro-n-butyl, 3-fluoro-sec-butyl, 2-fluoro-sec-butyl, 5-fluoro-n-pentyl, 1-fluoro-n-pentyl, 4-fluoroisopentyl, 3-fluoroisopentyl, 6-fluoro-n-hexyl, 4-fluoro-isohexyl, 7-fluoro-n-heptyl, 8-fluoro-n-octyl, 1, 2-difluoroethyl, difluoromethyl, trifluoromethyl, pentafluoroethyl, perfluoroisopropyl, perfluorobutyl, perfluorocyclohexyl, and the like may be used.

In the above-mentioned general Formula I, the kind and number of the alkoxy group attached to fluorine atom in the fluoroalkoxyl group having 1 to 20 carbon atoms are not particularly limited and may be selected depending on the actual requirements such as the chain alkoxyl group and the cycloalkoxyl group, wherein the chain alkoxyl group further comprises a straight alkoxyl group and a branched alkoxyl group. In the alkoxyl group, the number of oxygen atom is preferably 1 or 2. In addition, the number of fluorine atom attached to the alkoxy group may be 1, 2, 3, 4, 5 or 6.

As examples of fluoroalkoxy groups, fluoromethoxy, 2-fluoroethoxy, 3-fluoro-n-propoxy, 2-fluoroisopropoxy, 4-fluoro-n-butoxy, 3-fluoro-sec-butoxy, 5-fluoro-n-pentyloxy, 4-fluoroisopentyloxy, 3-fluoro-tert-pentyloxy, 3-fluoro-2,2-dimethylpropoxy, 3-fluoro -1-ethylpropoxy, 4-fluoro-1-methylbutoxy, 6-fluoron-hexyloxy, 5-fluoro-isohexyloxy, 3-fluoro-1,1,2-trimethylpropoxy, 2,2,2-trifluoroethoxy, 2,2,3,3,3-pentafluoro-propoxy, 2,2,3,3-tetrafluoropropoxy, OCH(CF₃)₂, and the like may be used.

Optionally, the primary lithium salt is selected from one or more of lithium bis(fluorosulfonyl)imide, lithium fluorosulfonyl(trifluoromethylsulfonyl) imide, lithium bis(trifluoromethylsulfonyl)imide, lithium methylsulfonyl(trifluoromethylsulfonyl) imide, lithium trifluoromethanesulfonyl(pentafluoroethylsulfonyl) imide, lithium bis (pentafluoroethylsulfonyl)imide, LiN(SO₂OCH₂CF₃)₂, LiN(SO₂OCH₂CF₂CF₃)₂, LiN(SO₂OCH₂CF₂CF₂H)₂, LiN[(SO₂OCH(CF₃)₂], FSO₂N(Li+)SO₂N(Li⁺)SO₂F, FSO₂N⁻ (Li⁺)SO₂N(Li+)SO₂N(Li⁺)SO₂F, FSO₂N⁻(Li⁺)SO₂N⁻(Li⁺)SO₂CF₃, CF₃SO₂N⁻(Li⁺)SO₂N⁻ (Li⁺)SO₂CF₃, and FSO₂N⁻(Li⁺)SO₂N⁻(Li⁺)SO₂N⁻(Li⁺)SO₂CF₃, and optionally selected from one or more of lithium bis(fluorosulfonyl)imide, lithium fluorosulfonyl(trifluoromethylsulfonyl) imide, lithium bis(trifluoromethylsulfonyl)imide, FSO₂N⁻(Li⁺)SO₂N⁻(Li⁺)SO₂F, FSO₂N⁻(Li⁺)SO₂N⁻(Li⁺)SO₂N⁻(Li⁺)SO₂F, FSO₂N⁻(Li⁺)SO₂N⁻ (Li⁺)SO₂CF₃, CF₃SO₂N⁻(Li⁺)SO₂N⁻(Li⁺)SO₂CF₃, and FSO₂N(Li⁺)SO₂N⁻(Li⁺)SO₂N⁻ (Li⁺)SO₂CF₃.

The primary lithium salt is used as the main lithium salt in the application, and a very beneficial technical effect is obtained. Because of its special structural characteristics, fluorinated sulfonimide lithium salt has high conductivity and can improve the dynamic performance of the battery. Specifically, in fluorinated sulfonimide lithium salt, the imine anion is larger than common anion PF6- and difficult to migrate, which improves the relative migration ability of Li+. In addition, the imine anion is a large conjugated structure with a small electron cloud density and small interaction force with Li+. The above two aspects work together to make the electrolyte solution containing fluorinated sulfonimide lithium salt have high conductivity. In addition, the imine lithium salt anion has strong similarity miscibility with the polymer of the above network coating layer so that the solvated Li+ and imine anion are easier to pass through the polymer layer, which improves the wettability and ion conduction of the electrolyte solution at the surface of the negative electrode plate, and helps to improve the dynamic cycle performance of the battery. However, considering the practical application, the amount of the primary lithium salt should not be too high, otherwise it would be corrosive to the current collector, especially an aluminum current collector.

Therefore, in embodiments according to the present application, the mass percentage concentration of the primary lithium salt in the electrolyte solution is in the range of 5% to 25%, or in the range of 10% to 20%.

According to embodiments of the application, the lithium ion electrolyte further comprises a secondary lithium salt, which is selected from one or more of lithium hexafluorophosphate, lithium tetrafluoroborate, lithium trifluoromethylsulfonate, lithium hexafluoroarsenate, lithium bisoxalate borate and lithium perchlorate, optionally selected from one or two of lithium hexafluorophosphate and lithium tetrafluoroborate, and more optionally selected from lithium hexafluorophosphate.

In embodiments of the present application, the mass percentage concentration of the secondary lithium salt in the electrolyte solution is in the range of 0% to 10%, or in the range of 1% to 10%.

The inventors have found through research that when the content of the fluorinated sulfonimide lithium salt is small, the conductivity of the electrolyte solution cannot be effectively improved; when the content is too high, the corrosion of aluminum foil by high concentration lithium salt would be obvious. In the lithium ion electrolyte solution of the present application, during the first charging, part of the secondary lithium salt will decompose to produce fluorine ions, which react with the aluminum foil as a collector to form an aluminum fluoride passivation layer, thereby inhibiting the corrosion of the aluminum foil. It has been found that when the mass percentage of the secondary lithium salt in the electrolyte solution is 3 mass% or higher, the corrosion of aluminum foil by the primary lithium salt can be effectively inhibited. However, the percentage of this secondary lithium salt should not be too high. Excessive addition of the secondary lithium salt, on one hand, leads to excessive viscosity of the electrolyte solution; on the other hand, the secondary lithium salt has significantly lower conductivity than the imine lithium salt as the primary lithium salt, which will deteriorate the rate performance and cycle performance of the secondary battery. If the addition amount of the secondary lithium salt is too low, the inhibition of aluminum foil corrosion will be reduced, resulting in the deterioration of cycle performance. Therefore, in some embodiments of the present application, the mass percentage of the secondary lithium salt in the electrolyte solution is in the range of 0.1% to 10%, optionally in the range of 3% to 5%.

In some embodiments, the electrolyte solution also includes an additive, wherein the additive can be selected from one or more of ethylene sulfate (DTD), lithium difluorophosphate (LiPO₂F₂), lithium difluoroxalate borate (LiODFB), maleic anhydride, sulfur dioxide (SO₂) and tris(trimethylsilane) phosphate (TMSP), and optionally selected from one or more of ethylene sulfate (DTD), lithium difluorophosphate (LiPO₂F₂), lithium difluoroxalate borate (LiODFB), maleic anhydride and tris(trimethylsilane) phosphate (TMSP).

The above additives play the following roles in the charging and discharging process of a battery: during the charging process, the additives may be reduced and decomposed, and some reduction and decomposition products may be deposited on the negative electrode interface, especially on the new interfaces formed by the expansion of silicon-based materials in time to participate in SEI film formation, inhibit the further occurrence of side reactions and improve the cycle performance. In addition, the interfacial film formed by the above additives on the negative electrode has less impedance and further improves the rate performance of the secondary battery.

In some optional embodiments, the amount of the additive is, relative to the total weight of the electrolyte solution, 0.1% to 5% by weight, for example, 0.3wt% to 5wt% , 0.5wt% to 5wt% , 0.1wt% to 2wt% , 0.3wt% to 2wt% , 0.5wt% to 2wt% , 0.1wt% to 1wt%, 0.3wt% to 1wt% , 0.5wt% to 1wt% , 0.5wt% to 1wt% , 0.1wt% to 0.5wt% , or 0.3wt% to 0.5wt%. If the content of the additive is too small, it may be difficult to form a stable interfacial film at the negative electrode interface, and thus cannot effectively inhibit the occurrence of side reactions. If the content of the additive is too high, the rate performance of the battery may deteriorate. Optionally, the content of the additive is within the above ranges.

In some embodiments according to the application, the electrolyte solution may contain one or more organic solvent(s). The organic solvent may be selected from one or more of dimethyl carbonate, diethyl carbonate, dipropyl carbonate, methyl ethyl carbonate, methyl propyl carbonate, ethylene carbonate, propylene carbonate, vinyl carbonate, propylene carbonate, butene carbonate, ethyl propyl carbonate, γ -butyrolactone, methyl formate, ethyl acetate, propyl acetate, methyl propionate, ethyl propionate, methyl propionate and tetrahydrofuran. In some optional embodiments, the mass percentage of the organic solvent in the electrolyte solution is from 65% to 85%.

The above non-aqueous organic solvents have good thermal stability and electrochemical stability, which provide a stable electrochemical environment for the electrical performance of the secondary battery.

The above electrolyte solution has high conductivity and is particularly suitable for secondary batteries with silicon-based negative electrode plates. In some embodiments of the present application, the conductivity of the electrolyte solution at 25°C is in the range of 6.5 to 11 mS/cm, optionally in the range of 8.0 to 11 mS/cm.

The above-mentioned electrolyte solution can be prepared according to the conventional methods in the art. The electrolyte solution may be obtained by mixing the organic solvent, the electrolyte lithium salt and an optional additive uniformly. The addition order of each material is not particularly limited. For example, the electrolyte solution may be obtained by adding the electrolyte lithium salt and optional additive to the organic solvent and mixing them uniformly. Alternatively, the electrolyte solution can be obtained by adding the electrolyte lithium salt to the organic solvent first, and then adding the optional additive to the organic solvent separately or simultaneously.

The positive electrode plate can be selected from various conventional positive electrode plates commonly used in the art, and its composition and preparation processes are well known in the art. For example, the positive electrode plate may comprise a positive current collector and a positive electrode active material layer disposed on the positive current collector, and the positive electrode active material layer may comprise a positive electrode active material, a binder, a conductive material and so on. Optionally, the positive electrode active material is a high nickel positive electrode active material represented by the structural formula LiₐNi_{1-b}M_{b}O₂, wherein a is in the range of 0.05 to 1.2, optionally 0.95 or more, more optionally 1.0, and b is in the range of 0 to 0.5 and M is at least one element selected from iron, cobalt, manganese, copper, zinc, aluminum, boron, gallium, and magnesium. Optionally, 0.2≤b≤0.5.

The separator used in the battery of the present application can be selected from various separators commonly used in the art.

The construction and preparation processes of these batteries are known per se. Due to the use of the above-mentioned negative electrode plate and electrolyte solution, the batteries can have improved rate performance and cycle performance. In an embodiment of the present application, the secondary battery has a 4C rate of 40% or higher and a capacity retention rate of 70% or higher.

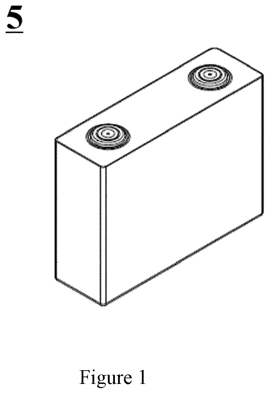

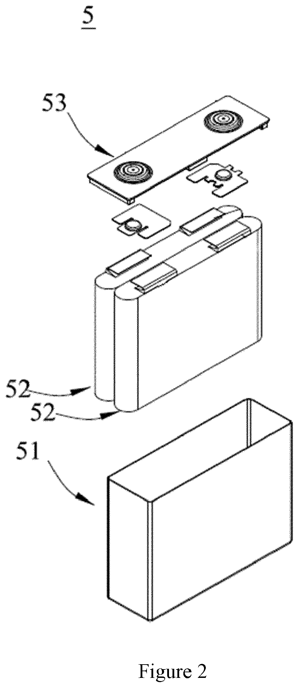

Next, the structure of a secondary according to the present application will be illustrated. Figure 1 shows the perspective view of a secondary battery 5. Figure 2 is an exploded view of Figure 1. Referring to Figure 1 and Figure 2, the secondary battery 5 includes a case 51, an electrode assembly 52, a top cover assembly 53, and an electrolyte solution (not shown).

The electrode assembly 52 is packed in the case 51. There is no limitation to the number of electrode assembly 52, which may be one or more. The electrode assembly 52 comprises a positive electrode plate, a negative electrode plate, and a separator. The separator separates the positive electrode plate from the negative electrode plate. The electrolyte solution is injected into the case 51 and the electrode assembly 52 is impregnated with the electrolyte solution, the electrode assembly comprising, for example, a first electrode plate, a second electrode plate and a separator.

It is to be noted that the secondary battery 5 shown in Figure 1 is a can-type battery, but is not limited thereto, and the secondary battery 5 may be a pouch-type battery in which the case 51 is replaced by a metal plastic film and the top cover assembly 53 is removed.

Next, a battery module according to the second aspect of the present application will be illustrated.

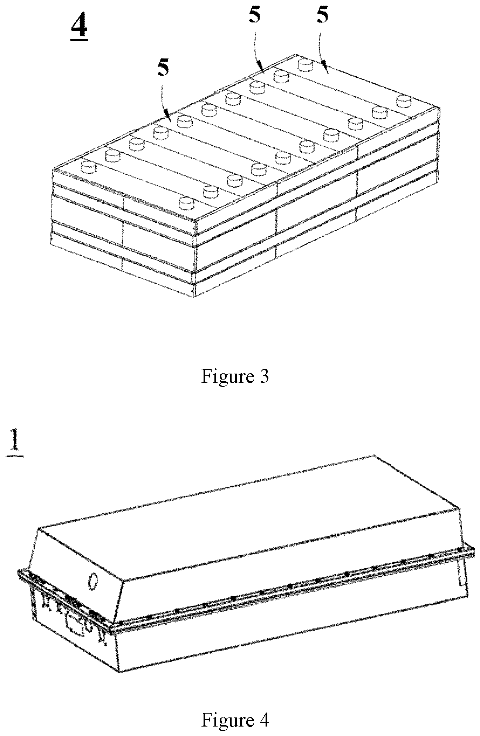

Figure 3 is a perspective view of a battery module 4 according to an embodiment of the present application.

The battery module 4 according to the second aspect of the present application comprises the secondary battery 5 according to the first aspect of the present application.

Referring to Figure 3, the battery module 4 includes a plurality of batteries 5. A plurality of secondary batteries 5 are arranged in the longitudinal direction. The battery module 4 can function as a power source or an energy storage device. The number of the secondary battery 5 contained in the battery module 4 can be adjusted according to the application and capacity of the battery module 4.

Next, a battery pack according to the third aspect of the present application will be illustrated.

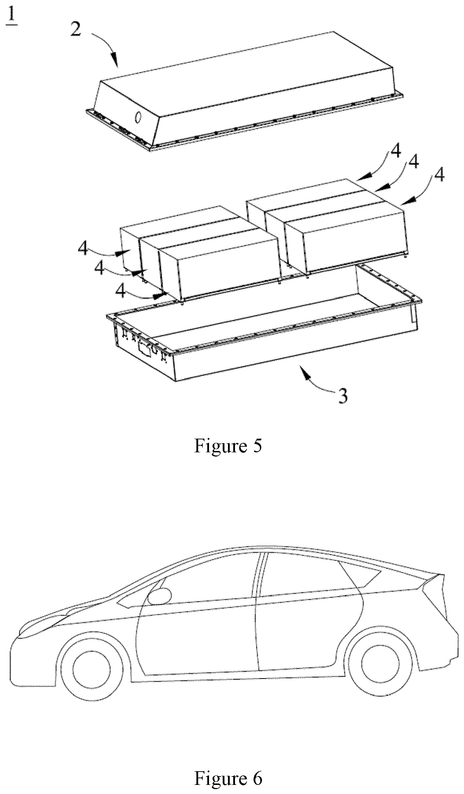

Figure 4 is a perspective view of a battery pack 1 according to an embodiment of the present application. Figure 5 is an exploded view of Figure 4.

The battery pack 1 according to the third aspect of the present application comprises the battery module 4 according to the second aspect of the present application.

Specifically, referring to Figure 4 and Figure 5, the battery pack 1 comprises an upper cabinet body 2, a lower cabinet body 3, and a battery module 4. The upper cabinet body 2 and the lower cabinet body 3 are assembled together to form a space in which the battery module 4 is packed. The battery module 4 is placed in the space formed by assembling the upper cabinet body 2 and the lower cabinet body 3 together. The battery module 4 comprises an output passing through one or both of the upper cabinet body 2 and the lower cabinet body 3 to supply power to the outside or to be charged from the outside. The number and arrangement of the battery modules 4 contained in the battery pack 1 can be determined according to actual needs.

Next, an apparatus according to the fourth aspect of the present application will be illustrated.

Figure 6 is a schematic view showing an apparatus with a secondary battery as a power source according to an embodiment of the present application.

The apparatus according to the fourth aspect of the present application comprises the secondary battery 5 according to the first aspect of the present application, and the secondary battery 5 can be used as a power source or energy storage unit of the apparatus. In Figure 6, the apparatus with the secondary battery 5 is an electric car. Of course, without limited thereto, the apparatus with the secondary battery 5 may be any other electric vehicles such as, an electric bus, an electric tram, an electric bicycle, an electric motorcycle, an electric scooter, an electric golf cart, an electric truck, electric ships, electric tools, electronic equipment and energy storage systems. The electric vehicle can be a pure electric vehicle, a hybrid electric vehicle, or a plug-in hybrid electric vehicle. Of course, according to the actual form of use, the apparatus according to the fourth aspect of the present application may comprises the battery module 4 according to the second aspect of the present application. Of course, the apparatus according to the fourth aspect of the present application may also comprises the battery pack 1 according to the third aspect of the present application.

### Examples

In order to make the object, technical solutions, and beneficial technical effects of the present application clearer, the following further describes the present application in detail with reference to examples. However, it should be understood that the examples of the present application are only for illustrating the present application, not for limiting the present application, and the examples of the application are not limited to the particular examples given in the specification. The examples in which the particular experimental conditions are not specified adopt the conventional conditions or the conditions recommended by material suppliers or equipment suppliers.

### 1. Preparation of negative electrode active materials

Silicon oxide SiOₓ (0<x<2) powders were subjected to pulverization treatment. At the same time, a polymers shown in Table 1 (including polyacrylamide with a weight average molecular weight of 10⁵ g/mol, polyacrylonitrile with a weight average molecular weight of 10⁵ g/mol, polyacrylic acid with a weight average molecular weight of 10⁴ g/mol and pyromellitic dianhydride-4,4'-diaminodiphenyl ether polyimide with a weight average molecular weight of 10⁵ g/mol) and a cross-linking agent (ethylene glycol in an amount of 0.05% by mass relative to the polymer) were dissolved into dimethylpyrrolidone in another container to prepare a polymer slurry. Then, the obtained polymer slurry was mixed with the pulverized silicon dioxide powders in the coating amount shown in Table 1 and the mixture was stirred until uniform, so as to produce a negative electrode active material slurry. The negative electrode active material slurry was dried at 50°C to 100°C until the solvent was completely removed. The obtained product was sieved and heated to cause cross-linking so as to give a negative electrode active material.

### 2. Preparation of secondary battery

### (1) Preparation of positive electrode plate

The positive electrode active material LiNi_{0.5}Mn_{0.3}Co_{0.2}O₂, the conductive agent Acetylene Black, and the binder polyvinylidene fluoride (PVDF) were dissolved into N-methylpyrrolidone (NMP) at a weight ratio of 94:3:3, fully mixed and stirred to produce a positive electrode slurry. Then, the positive electrode slurry was evenly coated onto a current collector aluminum (Al) foil, followed by drying, cold pressing, slicing and slitting, thereby giving a positive electrode plate.

### (2) Preparation of negative electrode plate

10Wt% aqueous carboxymethyl cellulose binder was fully dissolved in water, to which 10wt% carbon black as a conductive agent and 80wt% of the negative electrode active material prepared above were added to make a uniformly dispersed slurry. The slurry was evenly coated on the surface of a copper foil, and then transferred to a vacuum drying oven for complete drying. The obtained plate was rolled and then punched to give a negative electrode plate.

### (3) Preparation of electrolyte solution

In a glove box filled with argon gas (H₂O<10 ppm, O₂<0.1 ppm), the organic solvents fluoroethylene carbonate / ethylene carbonate / methyl ethyl carbonate (FEC / EC / EMC) were mixed at a weight ratio of 1 :2:7, then the fully dried primary lithium salt and secondary lithium salt shown in Table 1 were dissolved into the mixed organic solvent, followed by the addition of the additives shown in Table 1 as needed and stirring, giving the corresponding electrolyte solution.

### (4) Preparation of separator

Polyethylene film (PE) was used as the separator.

### (5) Assembly of secondary battery

The prepared positive electrode plate, separator, and negative electrode plate were stacked in order, so that the separator was disposed between the positive and negative electrode plates for isolation. After winding, an electrode assembly was obtained. The electrode assembly was packed in an outer packaging into which the electrolyte solution prepared above was injected followed by packaging.

### 3. Performance Test

### (1) Measurement of conductivity of electrolyte solution

A certain amount of the electrolyte solution prepared above was taken and divided into 3 parts on average. Then, the conductivity of each sample was measured at 25°C by Beijing Gallop Conductivity Tester DDL-9601. The average of the test results were used as the conductivity of the electrolyte solution.

### (2) Measurement of coating amount of polymer in negative electrode active materials

Test instrument: High Frequency Infrared Carbon Sulfur Analyzer, model HCS-140, commercially available from Shanghai Dekai Instrument Co., Ltd.

Test procedure: an appropriate amount of negative electrode active material was weighed, heated and burned in the above high frequency furnace under oxygen-rich condition so as to oxidize the carbon contained in the negative electrode active material into carbon dioxide. The generated gas was introduced into the corresponding absorption tank to absorb the corresponding infrared radiation and the absorbance was converted into the corresponding digital signals through the detector. The obtained digital signals were sampled by a computer, corrected linearly, and converted into a value proportional to the concentration of carbon dioxide or sulfur dioxide, and the values were accumulated to obtain an accumulated value. The carbon or sulfur content in the sample could be obtained by dividing the accumulated value by the sample weight, multiplying it by a correction factor and deducting the blank.

Based on the carbon or sulfur content in the sample and the molecular weight of the polymer used, the amount of the polymer network coating in the negative electrode active material could be calculated.

### (3) Test of cycle performance of secondary battery

The assembled lithium-ion battery was charged and discharged at 25°C. Specifically, the battery was first charged to 4.2V with a current of 0.5C, then discharged to 2.0V with a current of 0.5C, and the first discharge capacity was recorded. Then, the battery was subjected to 0.5C/0.5C charge/discharge cycle for 400 times, and the battery discharge capacity of the 400th time was recorded, The battery capacity retention rate after 400 charge/discharge cycles was obtained by dividing the discharge capacity of the 400th time by the discharge capacity of the first time.

### Test of rate performance of secondary battery

The lithium-ion battery was discharged at 25°C at a high rate. Specifically, the battery was charged to 4.2V with a current of 1C, then discharge to 2.8V with a current of 4C, and the first discharge capacity was recorded_{∘} The 4C rate performance of the battery was obtained by dividing the first discharge capacity of 1C/4C charge/discharge cycle by the first discharge capacity of 1C/1C charge/discharge cycle at 25°C.

**Table 1: Composition and electrochemical performance of secondary batteries**

| | Negative electrode active material | | Electrolyte solution | | | | | | | Electrical performance | |
|---|---|---|---|---|---|---|---|---|---|---|---|
| No. | Polymer | Coating amount | Primary lithium salt | Content | Secondary lithium salt | Content | Additive | Content | Conductivity (mS/cm) | Cycle at 25 °C | 4C Rate |
| Ex. 1 | Polyimide | 0.5% | LiFSI | 15% | LiPF₆ | 3% | / | / | 9.5 | 73% | 55% |
| Ex. 2 | Polyimide | 1% | LiFSI | 15% | LiPF₆ | 3% | / | / | 9.5 | 79% | 53% |
| Ex. 3 | Polyimide | 3% | LiFSI | 15% | LiPF₆ | 3% | / | / | 9.5 | 85% | 51% |
| Ex. 4 | Polyimide | 5% | LiFSI | 15% | LiPF₆ | 3% | / | / | 9.5 | 88% | 50% |
| Ex. 5 | Polyimide | 8% | LiFSI | 15% | LiPF₆ | 3% | / | / | 9.5 | 89% | 49% |
| Ex. 6 | Polyimide | 10% | LiFSI | 15% | LiPF₆ | 3% | / | / | 9.5 | 91% | 45% |
| Ex. 7 | Polyacrylonitrile | 3% | LiFSI | 15% | LiPF₆ | 3% | / | / | 9.5 | 85% | 52% |
| Ex. 8 | Polyacrylamide | 3% | LiFSI | 15% | LiPF₆ | 3% | / | / | 9.5 | 86% | 51% |
| Ex. 9 | Polyacrylic acid | 3% | LiFSI | 15% | LiPF₆ | 3% | / | / | 9.5 | 85% | 53% |
| Ex. 10 | Polyimide | 3% | LiFSI | 10% | LiPF₆ | 3% | / | / | 8.2 | 83% | 50% |
| Ex. 11 | Polyimide | 3% | LiFSI | 20% | LiPF₆ | 3% | / | / | 8.5 | 85% | 51% |
| Ex. 12 | Polyimide | 3% | LiFSI | 25% | LiPF₆ | 3% | / | / | 8 | 79% | 48% |
| Ex. 13 | Polyimide | 3% | LiFSI | 5% | LiPF₆ | 10% | / | / | 8.2 | 75% | 45% |
| Ex. 14 | Polyimide | 3% | LiFSI | 10% | LiPF₆ | 5.0% | / | / | 8.5 | 83% | 50% |
| Ex. 15 | Polyimide | 3% | LiFSI | 15% | LiPF₆ | 3% | / | / | 9.2 | 84% | 50% |
| Ex. 16 | Polyimide | 3% | LiFSI | 15% | LiPF₆ | 3% | LiPO₂F₂ | 0.50% | 9.1 | 89% | 55% |
| Ex. 17 | Polyimide | 3% | LiFSI | 15% | LiPF₆ | 3% | LiODFP | 0.50% | 9.4 | 90% | 56% |
| Ex. 18 | Polyimide | 3% | LiFSI | 15% | LiPF₆ | 3% | Maleic Anhydride | 0.50% | 9.3 | 89% | 55% |
| Ex. 19 | Polyimide | 3% | LiFSI | 15% | LiPF₆ | 3% | TMSP | 0.50% | 9.3 | 88% | 54% |
| Ex. 20 | Polyimide | 3% | LiFSI | 15% | LiPF₆ | 3% | DTD | 0.50% | 9.3 | 90% | 55% |
| Ex. 21 | Polyimide | 3% | FSO₂N⁻ | | | | | | | 88% | 55% |
| | | | (Li⁺)SO₂CF₃ | 15% | LiPF₆ | 3% | TMSP | 0.5% | 9 | | |
| Ex. 22 | Polyimide | 3% | CF₃SO₂N⁻ | | | | | | | 87% | 54% |
| | | | (Li⁺)SO₂CF₃ | 15% | LiPF₆ | 3% | TMSP | 0.5% | 8.8 | | |
| Ex. 23 | Polyimide | 3% | FSO₂N⁻(Li⁺)SO₂N⁻ | | | | | | | 88% | 54% |
| | | | (Li⁺)SO₂F | 15% | LiPF₆ | 3% | TMSP | 0.5% | 8.6 | | |
| Ex. 24 | Polyimide | 3% | FSO₂N⁻(Li⁺)SO₂ N⁻ | | | | | | | 86% | 53% |
| | | | (Li⁺)SO₂N⁻ | | | | | | | | |
| | | | (Li⁺)SO₂F | 15% | LiPF₆ | 3% | TMSP | 0.5% | 8.5 | | |
| Ex. 25 | Polyimide | 3% | FSO₂N⁻(Li⁺)SO₂N- | | | | | | | 8% | 52% |
| | | | (Li+)SO₂CF₃ | 15% | LiPF₆ | 3% | TMSP | 0.5% | 8.5 | | |
| Ex. 26 | Polyimide | 3% | CF₃SO₂N⁻ | | | | | | | 85% | 51% |
| | | | (Li⁺)SO₂N⁻ | | | | | | | | |
| | | | (Li⁺)SO₂CF₃ | 15% | LiPF₆ | 3% | TMSP | 0.5% | 8.4 | | |
| Ex. 27 | Polyimide | 3% | FSO₂N⁻(Li⁺)SO₂N⁻ | | | | | | | 86% | 50% |
| | | | (Li⁺)SO₂N⁻ | | | | | | | | |
| | | | (Li⁺)SO₂CF₃ | 15% | LiPF₆ | 3% | TMSP | 0.5% | 8.3 | | |
| CEx. 1 | / | / | LiFSI | 15% | LiPF₆ | 3% | / | / | 9.5 | 34% | 56% |
| CEx. 2 | Polyimide | 0.1% | LiFSI | 15% | LiPF₆ | 3% | / | / | 9.5 | 42% | 53% |
| CEx. 3 | Polyimide | 12 | LiFSI | 15% | LiPF₆ | 3% | / | / | 9.4 | 81% | 35% |
| CEx. 4 | Polyimide | 3 | LiPF₆ | 15% | / | / | / | / | 7.8 | 72% | 38% |
| CEx. 5 | / | / | LiPF₆ | 15% | / | / | / | / | 7.8 | 32% | 42% |

| | | | | | | | | | | | |
|---|---|---|---|---|---|---|---|---|---|---|---|
| Note: "/" means that the corresponding substance is not added. | | | | | | | | | | | |

It can be seen from the test results in Table 1 that, compared with the cycle performance and the 4C rate performance of Comparative Examples 1-5 obtained at 25°C, the overall performances of Examples 1-27 were improved. The above results show that a secondary battery with both high capacity and good cycle performance can be obtained by the combination of an electrolyte solution containing sulfonimide lithium salt and a negative electrode active material formed by coating a silicon-based material with an appropriate amount of polymer network coating.

In Comparative Example 1, the silicon-based material was not coated, and the secondary battery had high energy density while its cycle performance was very poor. In Comparative Example 4, a silicon-based material coated by a polymer network coating layer was used as the negative electrode active material, but a sulfonimide lithium salt was not used as the lithium salt, so the rate performance of the secondary battery was significantly reduced. In Comparative Examples 2 and 3, the network coating layer of the silicon-based materials was either too large or too small, resulting in unsatisfactory cycle performance and 4C rate performance of the secondary batteries.

The above results demonstrate that a secondary battery with both high capacity and good cycle performance can be obtained by the combination of an electrolyte solution containing sulfonimide lithium salt and a negative electrode active material formed by coating a silicon-based material with an appropriate amount of polymer network coating.

In addition, in the circumstances where an expression similar to "at least one of A, B and C" is used, such an expression should be construed to have a meaning generally understood by those skilled in the art. For example, the phrase "a system with at least one of A, B and C" should include but not be limited to: a system with A alone, a system with B alone, a system with C alone, a system with booth A and B, a system with both A and C, a system with both B and C, and / or a system with A, B and C, etc. in the circumstances where an expression similar to "at least one of A, B and C" is used, such an expression should be construed to have a meaning generally understood by those skilled in the art. For example, the phrase "a system with at least one of A, B and C" should include but not be limited to: a system with A alone, a system with B alone, a system with C alone, a system with booth A and B, a system with both A and C, a system with both B and C, and / or a system with A, B and C, etc. Those skilled in the art will further understand that, in fact, any words and/or phrases reciting two or more alternative terms, whether present in the description, claims or drawings, should be understood as covering the possibility of including one of these terms, or including one or two of these terms. For example, the phrase "A or B" should be understood to include the possibility of "A" or "B" or "A and B".

In addition, where features or aspects of the present disclosure are described in a Markush group, those skilled in the art will recognize that the present disclosure therefore describes any single member or subset of the members of the Markush group.

It will be apparent to those skilled in the art that the present application may be modified and varied in accordance with the above disclosure and teachings. Accordingly, the present application is not limited to the specific embodiments disclosed and described above, and modifications and variations of the present application are intended to be included within the scope of the claims of the present application. In addition, although some specific terminology is used in this specification, these terms are for convenience of illustration only and are not intended to limit the present application in any way.

## Claims

1. A secondary battery (5), comprising: a positive electrode plate, a negative electrode plate, a separator disposed between the positive electrode plate and the negative electrode plate, and an electrolyte solution, the negative electrode plate including a negative electrode current collector and a negative electrode active material layer provided on at least one side of the negative electrode current collector, and the electrolyte solution including an organic solvent and a lithium salt, wherein
the negative electrode active material comprises a core structure and a polymer network coating layer coated on at least a part of the surface of the core structure, the core structure comprises SiOₓ (0 < x < 2), the polymer network coating layer accounts for at least 0.5 mass% and at most 10 mass% of the total mass of the negative electrode active material, and the network coating layer has a network structure formed by cross-linked polymers and is derived from a polymer having one or more functional groups selected from a group consisting of cyano group, amide group, imide group, sulfonyl group, carboxyl group and sulfonyl group; and
the lithium salt comprises a primary lithium salt represented by Formula I: 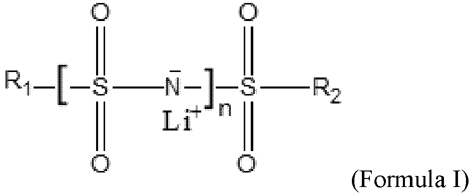
in which Formula I, R₁ and R₂ each independently represent a fluorine atom, a fluoroalkyl group having 1-20 carbon atoms, or a fluoroalkoxy group having 1-20 carbon atoms, and n is an integer of 1, 2 or 3,
the mass percentage concentration of the primary lithium salt in the electrolyte solution is in the range of 10% to 20%,
the lithium salt further comprises a secondary lithium salt, which is selected from one or more of lithium hexafluorophosphate, lithium tetrafluoroborate, lithium trifluoromethyl sulfonate, and lithium hexafluoroarsenate, and
the mass percentage concentration of the secondary lithium salt in the electrolyte solution is in the range of 3% to 5%.

2. The secondary battery (5) according to claim 1, wherein the polymer is selected from at least one of polyimide, polyacrylic acid, polyacrylamide and polyacrylonitrile.

3. The secondary battery (5) according to claim 1 or 2, wherein the polymer network coating layer is present in an amount of 1 mass% to 5 mass% relative to the total mass of the negative electrode active material.

4. The secondary battery (5) according to any one of claims 1 to 3, wherein the primary lithium salt is selected from one or more of lithium bis(fluorosulfonyl)imide, lithium fluorosulfonyl(trifluoromethylsulfonyl) imide, lithium bis(trifluoromethylsulfonyl)imide, lithium methylsulfonyl(trifluoromethylsulfonyl) imide, lithium trifluoromethanesulfonyl(pentafluoroethylsulfonyl) imide, lithium bis (pentafluoroethylsulfonyl)imide, LiN(SO₂OCH₂CF₃)₂, LiN(SO₂OCH₂CF₂CF₃)₂, LiN(SO₂OCH₂CF₂CF₂H)₂, LiN[(SO₂OCH(CF₃)₂], FSO₂N(Li+)SO₂N(Li⁺)SO₂F, FSO₂N⁻ (Li⁺)SO₂N⁻(Li⁺)SO₂N⁻(Li⁺)SO₂F, FSO₂N⁻(Li⁺)SO₂N⁻(Li⁺)SO₂CF₃, CF₃SO₂N⁻(Li⁺)SO₂N⁻ (Li⁺)SO₂CF₃, and FSO₂N⁻(Li⁺)SO₂N⁻(Li⁺)SO₂N⁻(Li⁺)SO₂CF₃, and optionally selected from one or more of lithium bis(fluorosulfonyl)imide, lithium fluorosulfonyl(trifluoromethylsulfonyl) imide, lithium bis(trifluoromethylsulfonyl)imide, FSO₂N⁻(Li⁺)SO₂N⁻(Li⁺)SO₂F, FSO₂N⁻(Li⁺)SO₂N⁻(Li⁺)SO₂N⁻(Li⁺)SO₂F, FSO₂N⁻(Li⁺)SO₂N⁻ (Li⁺)SO₂CF₃, CF₃SO₂N⁻(Li⁺)SO₂N⁻(Li⁺)SO₂CF₃, and FSO₂N⁻(Li⁺)SO₂N⁻(Li⁺)SO₂N⁻ (Li⁺)SO₂CF₃.

5. The secondary battery (5) according to any one of claims 1 to 4, wherein the electrolyte solution also comprises an additive selected from one or more of ethylene sulfate (DTD), lithium difluorophosphate (LiPO₂F₂), lithium difluoroxalate borate (LiODFB), maleic anhydride, sulfur dioxide (SO₂) and tris(trimethylsilane) phosphate (TMSP).

6. The secondary battery (5) according to claim 5, wherein the mass percentage concentration of the additive in the electrolyte solution is in the range of 0% to 5%, optionally in the range of 0.1 to 3%, and more optionally in the range of 0.2% to 2%.

7. The secondary battery (5) according to any one of claims 1 to 6, wherein the organic solvent is selected from one or more of propylene carbonate, ethylene carbonate, dimethyl carbonate, diethyl carbonate, dipropyl carbonate, methyl ethyl carbonate, methyl propyl carbonate, vinylene carbonate, fluoroethylene carbonate, methyl formate, ethyl acetate, ethyl propionate, propyl propionate, methyl butyrate, methyl acrylate, ethylene sulfite, propylene sulfite, dimethyl sulfite, diethyl sulfite, 1,3-propanesulfonic acid lactone, vinyl sulfate, anhydride, N-methylpyrrolidone, N-methylformamide, N-methylacetamide, acetonitrile, N, N-dimethylformamide, sulfolane, dimethyl sulfoxide, methyl sulfide, γ-butyrolactone, tetrahydrofuran, fluorine-containing cyclic organic ester, sulfur-containing cyclic organic ester and unsaturated-bond-containing cyclic organic ester, and optionally, the mass percentage of the organic solvent in the electrolyte solution is from 65% to 85%.

8. A battery module (4) comprising the secondary battery (5) as claimed in any one of claims 1 to 7.

9. A battery pack (1) comprising the battery module (4) according to claim 8.

10. An apparatus comprising the secondary battery (5) as claimed in any one of claims 1 to 7, wherein the secondary battery (5) is used as a power source or energy storage unit of the apparatus; optionally, the apparatus comprising electric vehicles, hybrid electric vehicles, plug-in hybrid electric vehicles, electric bicycles, electric scooters, electric golf carts, electric trucks, electric ships, or energy storage systems.

## Patentansprüche

1. Sekundärbatterie (5), umfassend: eine positive Elektrodenplatte, eine negative Elektrodenplatte, einen Separator, der zwischen der positiven Elektrodenplatte und der negativen Elektrodenplatte angeordnet ist, und eine Elektrolytlösung, wobei die negative Elektrodenplatte einen Negativelektroden-Stromabnehmer enthält und eine Negativelektroden-Aktivmaterialschicht, die auf mindestens einer Seite des Negativelektroden-Stromabnehmers vorgesehen ist, und die Elektrolytlösung ein organisches Lösungsmittel und ein Lithiumsalz enthält, wobei
das Negativelektroden-Aktivmaterial eine Kernstruktur und eine Polymernetzwerk-Überzugsschicht umfasst, die auf mindestens einem Teil der Oberfläche der Kernstruktur aufgetragen ist, die Kernstruktur SiOₓ (0 < x < 2) umfasst, die Polymernetzwerk-Überzugsschicht mindestens 0,5 Massen-% und höchstens 10 Massen-% der Gesamtmasse des Negativelektroden-Aktivmaterials ausmacht, und die Netzwerk-Überzugsschicht eine Netzwerkstruktur aufweist, die durch vernetzte Polymere gebildet ist, und von einem Polymer mit einer oder mehreren funktionellen Gruppen abgeleitet ist, die aus einer Gruppe bestehend aus Cyanogruppe, Amidgruppe, Imidgruppe, Sulfonylgruppe, Carboxylgruppe und Sulfonylgruppe ausgewählt ist; und
das Lithiumsalz ein primäres Lithiumsalz umfasst, das durch Formel I dargestellt ist: 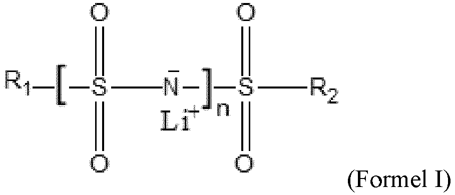
in der Formel I, R₁ und R₂ jeweils unabhängig voneinander ein Fluoratom, eine Fluoralkylgruppe mit 1-20 Kohlenstoffatomen oder eine Fluoralkoxygruppe mit 1-20 Kohlenstoffatomen darstellen und n eine ganze Zahl von 1, 2 oder 3 ist,
die Massenprozentkonzentration des primären Lithiumsalzes in der Elektrolytlösung im Bereich von 10 % bis 20 % liegt,
das Lithiumsalz ferner ein sekundäres Lithiumsalz umfasst, das aus einem oder mehreren von Lithiumhexafluorphosphat, Lithiumtetrafluorborat, Lithiumtrifluormethylsulfonat und Lithiumhexafluorarsenat ausgewählt ist, und
die Massenprozentkonzentration des sekundären Lithiumsalzes in der Elektrolytlösung im Bereich von 3% bis 5% liegt.

2. Sekundärbatterie (5) nach Anspruch 1, wobei das Polymer aus mindestens einem Stoff von Polyimid, Polyacrylsäure, Polyacrylamid und/oder Polyacrylnitril ausgewählt ist.

3. Sekundärbatterie (5) nach Anspruch 1 oder 2, wobei die Polymernetzwerk-Überzugsschicht in einer Menge von 1 Massen-% bis 5 Massen-%, bezogen auf die Gesamtmasse des Negativelektroden-Aktivmaterials, vorhanden ist.

4. Sekundärbatterie (5) nach einem der Ansprüche 1 bis 3, wobei das primäre Lithiumsalz aus einem oder mehreren von Lithiumbis(fluorsulfonyl)imid, Lithiumfluorsulfonyl(trifluormethylsulfonyl)imid, Lithiumbis(trifluormethylsulfonyl)imid, Lithiummethylsulfonyl(trifluormethylsulfonyl)imid, Lithiumtrifluormethansulfonyl(pentafluorethylsulfonyl)imid, Lithiumbis(pentafluorethylsulfonyl)imid, LiN(SO₂OCH₂CF₃)₂, LiN(SO₂OCH₂CF₂CF₃)₂, LiN(SO₂OCH₂CF₂CF₂H)₂, LiN[(SO₂OCH(CF₃)₂], FSO₂N⁻(Li⁺)SO₂N⁻(Li⁺)SO₂F, FSO₂N⁻ (Li⁺)SO₂N⁻(Li⁺)SO₂N⁻(Li⁺)SO₂F, FSO₂N⁻(Li⁺)SO₂N⁻(Li⁺)SO₂CF₃, CF₃SO₂N⁻(Li⁺)SO₂N⁻ (Li⁺)SO₂CF₃, und FSO₂N⁻(Li⁺)SO₂N⁻(Li⁺)SO₂N⁻(Li⁺)SO₂CF₃ ausgewählt ist, und gegebenenfalls aus einem oder mehreren von Lithiumbis(fluorsulfonyl)imid, Lithiumfluorsulfonyl(trifluormethylsulfonyl)imid, Lithiumbis(trifluormethylsulfonyl)imid, FSO₂N⁻(Li⁺)SO₂N⁻(Li⁺)SO₂F, FSO₂N⁻(Li⁺)SO₂N⁻(Li⁺)SO₂N⁻(Li⁺)SO₂F, FSO₂N⁻(Li⁺)SO₂N⁻ (Li⁺)SO₂CF₃, CF₃SO₂N⁻(Li⁺)SO₂N⁻(Li⁺)SO₂CF₃, und FSO₂N⁻(Li⁺)SO₂N⁻(Li⁺)SO₂N⁻ (Li⁺)SO₂CF₃ ausgewählt ist.

5. Sekundärbatterie (5) nach einem der Ansprüche 1 bis 4, wobei die Elektrolytlösung ferner ein Additiv umfasst, das aus einem oder mehreren von Ethylensulfat (DTD), Lithiumdifluorphosphat (LiPO₂F₂), Lithiumdifluoroxalatborat (LiODFB), Maleinsäureanhydrid, Schwefeldioxid (SO₂) und Tris(trimethylsilan)phosphat (TMSP) ausgewählt ist.

6. Sekundärbatterie (5) nach Anspruch 5, wobei die Massenprozentkonzentration des Additivs in der Elektrolytlösung im Bereich von 0 % bis 5 %, gegebenenfalls im Bereich von 0,1 bis 3 % und ferner gegebenenfalls im Bereich von 0,2 % bis 2 % liegt.

7. Sekundärbatterie (5) nach einem der Ansprüche 1 bis 6, wobei das organische Lösungsmittel aus einem oder mehreren von Propylencarbonat, Ethylencarbonat, Dimethylcarbonat, Diethylcarbonat, Dipropylcarbonat, Methylethylcarbonat, Methylpropylcarbonat, Vinylencarbonat, Fluorethylencarbonat, Methylformiat, Ethylacetat, Ethylpropionat, Propylpropionat, Methylbutyrat, Methylacrylat, Ethylensulfit, Propylensulfit, Dimethylsulfit, Diethylsulfit, 1,3-Propansulfonsäurelacton, Vinylsulfat, Anhydrid, N-Methylpyrrolidon, N-Methylformamid, N-Methylacetamid, Acetonitril, N,N-Dimethylformamid, Sulfolan, Dimethylsulfoxid, Methylsulfid, γ-Butyrolacton, Tetrahydrofuran, fluorhaltigem cyclischem organischem Ester, schwefelhaltigem cyclischem organischem Ester und ungesättigte Bindung enthaltendem cyclischem organischem Ester ausgewählt ist, und gegebenenfalls der Massenprozentsatz des organischen Lösungsmittels in der Elektrolytlösung 65 % bis 85 % beträgt.

8. Batteriemodul (4), umfassend die Sekundärbatterie (5) nach einem der Ansprüche 1 bis 7.

9. Batteriepack (1), umfassend das Batteriemodul (4) nach Anspruch 8.

10. Vorrichtung mit der Sekundärbatterie (5) nach einem der Ansprüche 1 bis 7, wobei die Sekundärbatterie (5) als Stromquelle oder Energiespeichereinheit der Vorrichtung verwendet wird; gegebenenfalls die Vorrichtung Elektrofahrzeuge, Hybridelektrofahrzeuge, Plug-in-Hybridelektrofahrzeuge, Elektrofahrräder, Elektroroller, Elektrogolfwagen, Elektrolastwagen, Elektroschiffe oder Energiespeichersysteme umfasst.

## Revendications

1. Batterie secondaire (5), comprenant : une plaque d'électrode positive, une plaque d'électrode négative, un séparateur disposé entre la plaque d'électrode positive et la plaque d'électrode négative, et une solution électrolytique, la plaque d'électrode négative comprenant un collecteur de courant d'électrode négative et une couche de matériau actif d'électrode négative prévue sur au moins un côté du collecteur de courant d'électrode négative, et la solution électrolytique comprenant un solvant organique et un additif, dans laquelle,
le matériau actif d'électrode négative comprend une structure de noyau et une couche de revêtement de réseau polymère appliquée sur au moins une partie de la surface de la structure de noyau, la structure de noyau comprend du SiOₓ (0 < x < 2), la couche de revêtement de réseau polymère représente un pourcentage d'au moins 0,5 % en masse et d'au plus 10 % en masse dans la masse totale du matériau actif d'électrode négative, et la couche de revêtement de réseau présente une structure de réseau formée par des polymères réticulés et est dérivée d'un polymère ayant un ou plusieurs groupes fonctionnels choisis dans un groupe constitué par le groupe cyano, le groupe amide, le groupe imide, le groupe sulfonyle, le groupe carboxyle et le groupe sulfonyle ; et
le sel de lithium comprend un sel de lithium primaire représenté par la formule I : 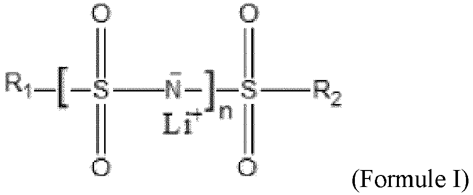
dans laquelle dans la formule I, R₁ et R₂ représentent chacune indépendamment un atome de fluor, un groupe de fluoroalkyle en C1-C20 ou un groupe fluoroalcoxyde en C1-C20, et n est un entier de 1, 2 ou 3,
la pourcentage en masse de concentration du sel de lithium primaire dans la solution électrolytique est comprise dans une plage de 10 % à 20 %,
le sel de lithium comprend en outre un sel de lithium secondaire, qui est un ou plusieurs choisis parmi le hexafluorophosphate de lithium, le tétrafluoroborate de lithium, le trifluorométhylsulfonate de lithium et l'hexafluoroarséniate de lithium, et
la pourcentage en masse de concentration du sel de lithium secondaire dans la solution électrolytique est comprise dans une plage de 3% à 5%.

2. Batterie secondaire (5) selon la revendication 1, dans laquelle le polymère est au moins un choisi parmi le polyimide, l'acide polyacrylique, le polyacrylamide et le polyacrylonitrile.

3. Batterie secondaire (5) selon la revendication 1 ou 2, dans laquelle la couche de revêtement de réseau polymère présente une quantité en masse de 1 % à 5% par rapport à la masse totale du matériau actif d'électrode négative.

4. Batterie secondaire (5) selon l'une quelconque des revendications 1 à 3, dans laquelle le sel de lithium primaire un ou plusieurs choisis parmi le bis(fluorosulfonyl)imide de lithium, le fluorosulfonyl (trifluorométhylsulfonyl)imide de lithium, le bis(trifluorométhylsulfonyl)imide de lithium, le méthylsulfonyl (trifluorométhylsulfonyl)imide de lithium, le trifluorométhanesulfonyle (pentafluoroéthylsulfonyl)imide de lithium, le bis(pentafluoroéthylsulfonyle)imide de lithiume, LiN(SO₂OCH₂CF₃)₂, LiN(SO₂OCH₂CF₂CF₃)₂, LiN(SO₂OCH₂CF₂CF₂H)₂, LiN[(SO₂OCH(CF₃)₂], FSO₂N(Li+)SO₂N(Li⁺)SO₂F, FSO₂N⁻(Li⁺)SO₂N⁻(Li⁺)SO₂N⁻(Li⁺)SO₂F, FSO₂N⁻(Li⁺)SO₂N⁻(Li⁺)SO₂CF₃, CF₃SO₂N⁻(Li⁺)SO₂N⁻(Li⁺)SO₂CF₃, and FSO₂N⁻(Li⁺)SO₂N⁻(Li⁺)SO₂N⁻(Li⁺)SO₂CF₃, et éventuellement un ou plusieurs choisis parmi le bis(fluorosulfonyl)imide de lithium, le fluorosulfonyle (trifluorométhylsulfonyle)imide de lithium, le bis(trifluorométhylsulfonyl)imide de lithium, FSO₂N(Li+)SO₂N(Li⁺)SO₂F, FSO₂N⁻(Li⁺)SO₂N⁻(Li⁺)SO₂N⁻(Li⁺)SO₂F, FSO₂N⁻(Li⁺)SO₂N⁻(Li⁺)SO₂CF₃, CF₃SO₂N⁻(Li⁺)SO₂N⁻(Li⁺)SO₂CF₃, et FSO₂N⁻(Li⁺)SO₂N⁻(Li⁺)SO₂N⁻(Li⁺)SO₂CF₃.

5. Batterie secondaire (5) selon l'une quelconque des revendications 1 à 4, dans laquelle la solution électrolytique comprend également un additif qui est un ou plusieurs choisis parmi le sulfate d'éthylène (DTD), le difluorophosphate de lithium (LiPO₂F₂), le borate de difluoroxalate de lithium (LiODFB), l'anhydride maléique, le dioxyde de soufre (SO₂) et le phosphate de tris (triméthylsilane) (TMSP).

6. Batterie secondaire (5) selon la revendication 5, dans laquelle le pourcentage en masse de concentration de l'additif dans la solution d'électrolyte est compris dans une plage de 0% à 5%, éventuellement de 0,1% à 3%, et plus éventuellement de 0,2% à 2%.

7. Batterie secondaire (5) selon l'une quelconque des revendications 1 à 6, dans laquelle le solvant organique est un ou plusieurs choisis parmi le carbonate de propylène, le carbonate d'éthylène, le carbonate de diméthyle, le carbonate de diéthyle, le carbonate de dipropyle, le carbonate de méthyle éthyle, le carbonate de méthyle propyle, le carbonate de vinylène, le carbonate de fluoroéthylène, le formatiate de méthyle, l'acétate d'éthyle, le propionate d'éthyle, le propionate de propyle, le butyrate de méthyle, l'acrylate de méthyle, le sulfite d'éthylène, le sulfite de propylène, le sulfite de diméthyle, le sulfite de diéthyle, l'actone d'acide 1,3-propanesulfonique, le sulfate de vinyle, l'anhydride, le N-méthylpyrrolidone, le N-méthylformamide, le N-méthylacétamide, l'acétonitrile, le N,N-diméthylformamide, le sulfolane, le diméthylsulfoxyde, le sulfure de méthyle, la γ-butyrolactone, la tétrahydrofurane, l'ester organique cyclique contenant du fluor, l'ester organique cyclique contenant du soufre et l'ester organique cyclique contenant de liaisons insaturées, et éventuellement, le pourcentage en masse du solvant organique dans la solution d'électrolyte est de 65% à 85%.

8. Module de batterie (4), comprenant la batterie secondaire (5) selon l'une quelconque des revendications 1 à 7.

9. Bloc de batteries (1), comprenant le module de batterie (4) selon la revendication 8.

10. Dispositif comprenant la batterie secondaire (5) selon l'une quelconque des revendications 1 à 7, dans lequel la batterie secondaire (5) est utilisée en tant que source d'alimentation ou unité de stockage d'énergie du dispositif ; éventuellement, le dispositif comprend des véhicules électriques, des véhicules électriques hybrides, des véhicules électriques hybrides rechargeables, des vélos électriques, des scooters électriques, des voiturettes de golf électrique, des camions électrique, des bateaux électriques ou des systèmes de stockage d'énergie.
